Europäisches Patentamt

European Patent Office

Office européen des brevets

(19)

(11) Veröffentlichungsnummer: **0 041 728**
**A1**

(12) # EUROPÄISCHE PATENTANMELDUNG

(21) Anmeldenummer: 81104443.7

(22) Anmeldetag: 10.06.81

(51) Int. Cl.³: **B 03 D 1/14**
**B 03 D 1/24, C 02 F 1/24**
**D 21 F 1/70**

(30) Priorität: 11.06.80 DE 3021822

(43) Veröffentlichungstag der Anmeldung:
16.12.81 Patentblatt 81/50

(84) Benannte Vertragsstaaten:
**BE IT**

(71) Anmelder: **J.M. Voith GmbH**
**St. Pöltener Strasse 43**
**D-7920 Heidenheim(DE)**

(72) Erfinder: **Meinecke, Albrecht, Dr.-Ing.**
**Hans Holbein-Strasse 39**
**D-7920 Heidenheim(DE)**

(72) Erfinder: **Pfalzer, Lothar, Dr.-Ing.**
**Wächterstrasse 9**
**D-7920 Heidenheim(DE)**

(54) **Flotationszelle.**

(57) Flotationsbehälter ohne Rührwerk mit einer Schaumabzugsvorrichtung und einem im wesentlichen horizontalen
Durchfluß, bei dem die gesamte Suspension (2) am Eintrittsende über die Behälterbreite verteilt an einer oder durch eine
dieser bestimmende Querwand in den Behälter eingeleitet
wird. Der Flotationsbehälter zeichnet sich dadurch aus, daß in
mindestens in der Nähe der die Breite des Flotationsbehälters
bestimmenden Querwand überwiegend auch die Luft (13)
über die Behälterbreite verteilt zugeführt wird und
ausschließlich am Austrittsende des Flotationsbehälters der
Schaum abgeführt wird. Dabei ist die durch den gegenseitigen Abstand der die Behälterbreite bestimmenden Querwände gegebene Länge des Flotationsbehälters so groß, daß
der zwischen diesen Querwänden liegende Gesamtströmungsweg der Suspension wesentlich größer ist als die durchschnittliche Höhe des Flüssigkeitsspiegels im Flotationsbehälter. Weiterhin wird durch eine mittels einer Einschnürung
der Suspensionsströmung kurz vor der Schaumabzugsrinne
(4) bewirkte Beschleunigung der Suspensionsströmung der
Schaumabzug unterstützt, und es befindet sich die Schaumabzugsrinne (4) quer zur Strömungsrichtung der Suspension und sie erstreckt sich über mindestens die an der Einschnürstelle der Suspensionsströmung vorhandene Breite
des Flotationsbehälters.

Die dadurch geschaffene Flotationseinrichtung arbeitet
sehr leistungsarm bei bestem Wirkungsgrad.

Fig. 1

Croydon Printing Company Ltd.

S 3764                                    J.M. Voith GmbH
Kennwort: "Flach-Flotationszelle"         Heidenheim


Flotationszelle


Die Erfindung betrifft eine Flotationszelle entsprechend dem
Oberbegriff des Patentanspruchs 1.


Eine solche Flotationszelle ist bekanntgeworden durch die
US-PS 2 005 742. Bei dieser Flotationszelle wird die für die
Flotation benötigte Luft über am Boden des Flotationskastens
angeordnete flächenförmige Zuführeinrichtungen mit insbesondere porösem Aufbau zugeführt. Die zu flotierende Suspension
wird in Bodennähe durch eine in einer der an den Schmalseiten des Flotationskastens befindlichen Seitenwand desselben
vorgesehenen Öffnung zugeführt. Die Zuführung der Luft erfolgt
dabei praktisch über die ganze Länge des Flotationskastens, sofern man mit Länge die in der Hauptströmungsrichtung der Suspension sich erstreckende Dimension des Flotationskastens ansieht, und zwar durch am Boden desselben befindliche poröse Matten oder ähnliches poröses Material, wodurch aber die Gefahr des Zusetzens der Löcher oder Poren groß ist. Der Abzug des sich bildenden Schaumes erfolgt aus an seitlich am Flotionskasten angebrachten Schaumabzugsrinnen, ohne mechanische Hilfsmittel allein durch den Druck des an der Oberfläche sich sammelnden Schaumes.

Gegenüber dieser Flotationszelle einfachsten Aufbaus haben sich in letzter Zeit überwiegend solche Flotationszellen durchgesetzt, die mit Rührwerken arbeiten, bei welchen auch gleichzeitig die Luft durch Zugabe in das Rührwerk selbst oder in dessen Nähe zugeführt wird. Diese Flotationseinrichtungen haben einen relativ hohen Leistungsbedarf.

Die Aufgabe der Erfindung ist es, eine Flotationseinrichtung zu schaffen, die einen geringen Leistungsbedarf hat, eventuell sogar ohne mechanische Leistung auskommt und die Wirkungsweise der eingangs beschriebenen Zellen einfachsten Aufbaus wesentlich verbessert, wobei noch die Möglichkeit gegeben werden soll, die Flotationszellen stapelbar auszubilden.

Diese Aufgabe wird bei einer Flotationszelle der eingangs genannten Art durch die kennzeichnenden Merkmale des Patentanspruchs 1 gelöst.

Durch eine derartige Ausbildung einer Flotationszelle, die praktisch ohne äußere mechanische Leistung auskommt, wird aufgrund der Tatsache, daß bei einer im Verhältnis zu bekannten Flotationseinrichtungen durchschnittlich geringen Höhe der Suspension von etwa 1 m die zu flotierenden Teilchen, sofern man diejenigen in Betracht zieht, die bei der Einleitung in die Flotationszelle in Bodennähe sich befinden, einen relativ kurzen Abscheideweg bis zur Oberfläche der Flotationstrübe haben, und weiterhin, daß ihr ein relativ langer Weg zur Flotation, d.h. zum Aufsteigen an die Oberfläche der Trübe zur Verfügung steht, erreicht, daß auch ohne mechanische Hilfsmittel, wie insbesondere Rührwerke, eine gute Abscheidewirkung erzielt werden kann. Ferner wird durch die Anordnung eines Beschleunigungselementes, welches z.B. durch ein am Boden des jeweiligen Flotationsbehälters angeordnetes Bodenwehr gebildet sein kann, die Abscheidung des Schaumes bzw. dessen Förderung in die Schaumsammelrinne wesentlich erleichtert und gleichzeitig dabei verhindert, daß aufgrund zu langsamer Strömung mit stationären Stromfäden auch die nicht zu flotierenden, in den Gutstoff zu fördernden Faserteilchen mit abflotiert werden. Ferner sind die einzelnen Flotationszellen relativ flach, so daß eine geringe Stapelhöhe erreicht wird.

Bevorzugte Ausführungsformen gehen aus den Unteransprüchen 2 bis 4 hervor.

Weitere zweckmäßige Ausbildungen der erfindungsgemäßen Flotationseinrichtung sind mit den Ansprüchen 9, 10, 13 - 19 beschrieben.

Nachfolgend wird nun die erfindungsgemäße Einrichtung anhand der Figuren erläutert, wobei im einzelnen darstellen:

Fig. 1 erfindungsgemäße Flotationszellen in Stapelbauweise,

Fig. 2 einen Querschnitt durch einen erfindungsgemäßen Injektor, gemäß II-II in Fig. 3,

Fig. 3 eine Ansicht (A) dazu,

Fig. 4 einen Teilquerschnitt in Prinzipdarstellung,

Fig. 5 ebenfalls einen Teilquerschnitt in Prinzipdarstellung,

Fig. 6 eine Stapelanordnung,

Fig. 7, 8 und 9 weitere Bauformen und

Fig. 10 eine Ausführung mit Luftinjektorrührern.

-4-

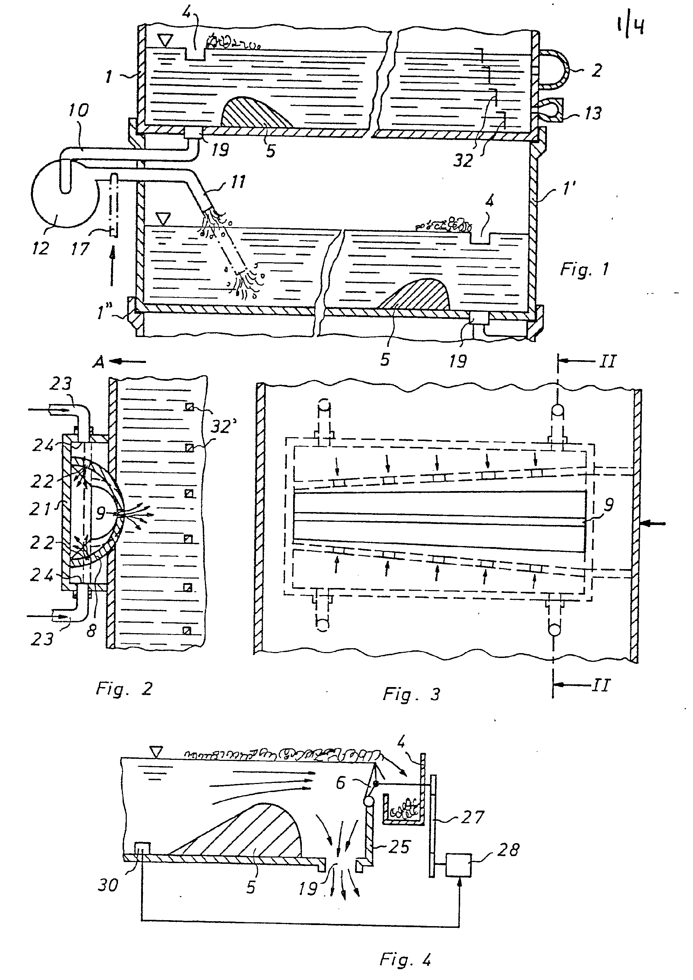

In Fig. 1 ist im einzelnen dargestellt jeweils der Flotationskasten 1, 1', wobei noch weitere Flotationskästen 1" usw. folgen können. Mit 5 ist ein Wehr am Boden des Flotationskastens dargestellt, mit 4 die Schaumabzugsrinne, mit 19 die über die Behälterbreite verteilten Bodenöffnungen im jeweiligen Flotationskasten, aus denen die Flotationstrübe austritt bzw. in den nachfolgenden Flotationskasten übertritt, und mit 2 der Verteiler für die Zuführung der Suspension in den jeweiligen Flotationskasten.

In Fig. 1 ist weiterhin dargestellt, daß sich an die Bodenöffnungen 19 jeweils ein Fallrohr 10 anschließen kann, das sich in einem weiteren Fallrohr 11 fortsetzt, mittels dem die Suspension in den nachfolgenden Flotationskasten eingeleitet wird. Dabei kann das Fallrohr 11 entweder oberhalb des Suspensionsspiegels enden, so daß die Suspension im weiteren Verlauf im freien Fall in die jeweils im nachfolgenden unteren Behälter befindliche Suspension strömt, wobei gleichzeitig eine Verwirbelung und Vermischung mit Luft erfolgt, oder es kann dieses Fallrohr 11 auch innerhalb der Suspension enden. In diesem Fall ist es möglich, durch ein Luftzuführungsrohr 17 (strich-punktiert dargestellt), das in das Fallrohr 11 mündet, die benötigte Luft zuzuführen. Weiterhin ist in Fig. 1 dargestellt, daß zwischen die beiden Fallrohre 10 und 11 eine Förderpumpe 12 eingeschaltet ist. Es ist aber auch ohne weiteres möglich, daß die Suspension dem jeweils unteren Flotationskasten nach Austritt aus den Bodenöffnungen 19 des jeweils oberen Flotationskastens im freien Fall zuströmt.

Die Zuführung der benötigten Luft kann auf verschiedene Weise erfolgen. So ist in Fig. 1 in bezug auf den oberen Flotationskasten angedeutet, daß dazu ein Luftinjektor 13 z.B. mit Schlitzdüse verwendet werden kann. In den Figuren 2 und 3 ist eine weitere Möglichkeit beschrieben.

## Die beste Ausführungsform

In Fig. 2 erfolgt die Zuführung sowohl der Suspension als auch der benötigten Luft mittels eines Querstromverteilers, welcher kastenförmig ausgebildet ist. Innerhalb des Verteilerkastens 21 befindet sich dabei ein halbkreisförmiges Rohr 8, das, wie die Ansicht derselben Einrichtung in Fig. 3 zeigt, in Strömungsrichtung betrachtet, abnehmenden lichten Querschnitt aufweist. Über feine Bohrungen 22 wird dabei die benötigte Luft aus dem Verteilerkasten 21, dem diese Luft über Zufuhrrohre 23 zugeführt wird, übertreten gelassen, so daß sie sich innerhalb des Halbrohres mit der Suspension vermischt und mit dieser dann durch den Schlitz 9 in den Flotationskasten eintritt.

Die Luft kann noch dadurch gleichmäßiger verteilt werden, daß kurz hinter dem Einlauf Störgitter angeordnet werden. Diese können als senkrecht oder schräg übereinanderliegende Stäbe 32' oder Winkelbleche 32 ausgebildet sein.

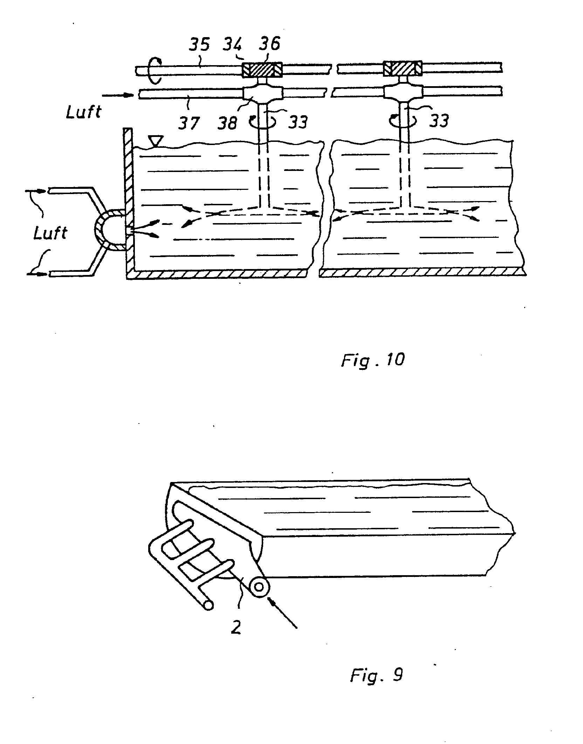

Ferner können zur Unterstützung der Luftverteilung im weiteren Strömungsverlauf Luftinjektorrührwerke 33 vorgesehen sein, die nur wenig Antriebsenergie benötigen. Diese kann z.B. auch vermieden werden, wenn man die Injektoren mit Rückstoßantrieb (nach Art der Rasensprenger) ausbildet. Sie können angetrieben werden z.B. über eine von einem Motor (nicht dargestellt) angetriebene Welle 35 über ein Schneckengetriebe mit Schnecke 34 und Zahnrad 36, wie es in Figur 10 dargestellt ist. Die Luft wird dabei über eine Verteilleitung 37 und Verteilerstücke 38 den einzelnen Injektoren 33 zugeführt.

Es können aber auch z.B. Einzel-Motorantriebe für jeden der Injektoren 33 vorgesehen werden.

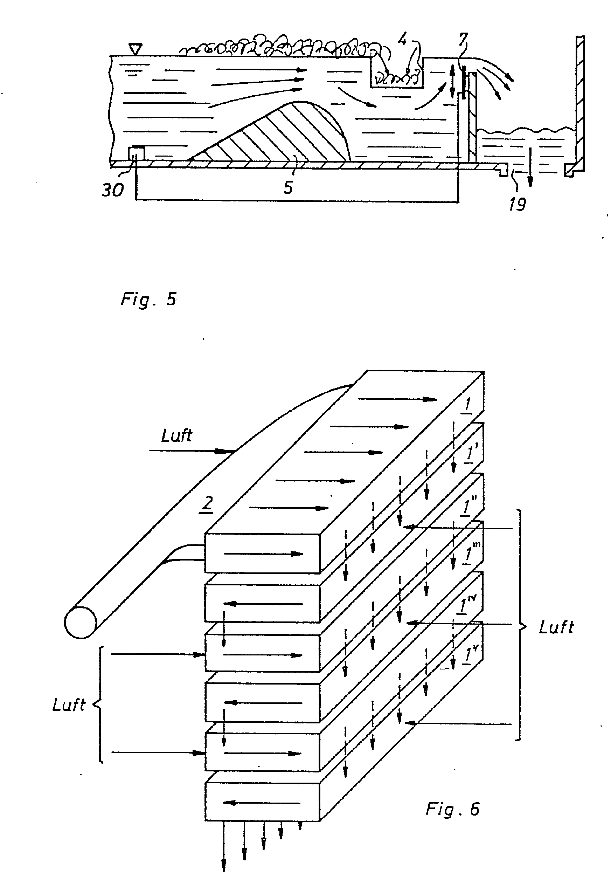

Die Schaumabzugs- oder Sammelrinne 4 befindet sich an dem dem Suspensionseintritt gegenüberliegenden Ende des Flotationskastens. Zum besseren Schaumabzug ist kurz vor der Schaumsammelrinne in Strömungsrichtung ein Wehr 5 am Boden des Flotationskastens angeordnet. Dadurch wird die Strömung beschleunigt, so daß auch die Austragung des Schaumes beschleunigt erfolgt; gleichzeitig wird dadurch auch verhindert, daß durch die Turbulenz die Faserteilchen, die an sich nicht abflotiert werden sollen, mit den Schaumbläschen aufsteigen und in die Schaumsammelrinne gelangen. Für die Anordnung der Schaumsammelrinne gibt es auch unterschiedliche Möglichkeiten, wie aus den Figuren 4 und 5 hervorgeht.

In Fig. 4 ist in Strömungsrichtung hinter dem Überlaufwehr 5 ein verstellbares Wehr 6 an einer Querwandung 25 des Flotationskastens angeordnet. Dieses verstellbare Wehr wird über ein Gestänge 27 von einem Stellmotor 28 betätigt. Dieser Stellmotor erhält die Stellsignale über einen am Boden des Flotationskastens angeordneten Drucktransmitter 30, so daß die Verstellung des Wehrs abhängig vom Flüssigkeitsstand im jeweiligen Flotationskasten geregelt werden kann. Die Schaumsammelrinne 4 ist in diesem Falle strömungsmäßig hinter dem verstellbaren Wehr 6 angeordnet.

Im Falle der Fig. 5 ist das regelbare Wehr 7 in Strömungsrichtung hinter der Schaumsammelrinne angeordnet, so daß sich in diesem Falle die Bedingung ergibt, daß die Abflußöffnung 19 im Boden des Flotationskastens so bemessen sein muß, daß auf jeden Fall der maximal mögliche Durchsatz jeweils abfließen kann.

Die Öffnungen im Boden können z.B. auch als eine Reihe paralleler länglicher Schlitze ausgebildet sein. Ferner ist es möglich, die Luftzuführung durch einen zwischen die Fallrohre 10 und 11 jeweils eingeschalteten Dispergierapparat vorzunehmen.

Durch Figur 4 und 5 ist weiterhin auch noch angedeutet, daß die Suspension jeweils dem unteren Behälter/frei zuströmen kann.

Figur 6 zeigt noch übereinandergestapelte Zellen, wobei angedeutet ist, wo und wie jeweils Suspension und Luft den einzelnen Flotationskästen zugeführt wird.

-7-

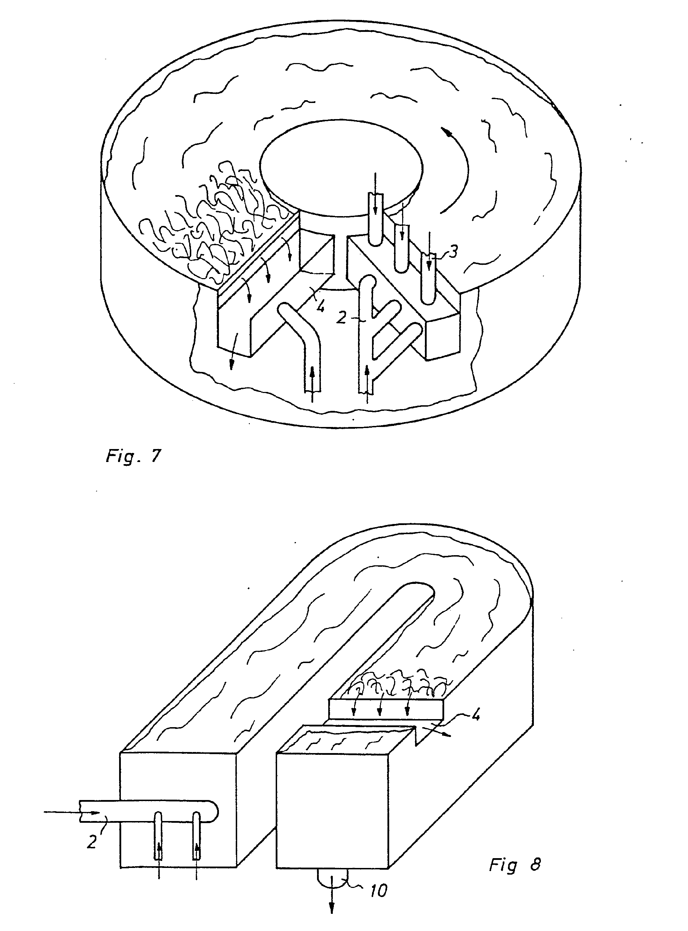

Figuren 7 und 8 zeigen, daß ein relativ langer Weg der Suspensionsströmung auch durch die kompakten Bauformen des Flotationsbehälters, also z.B. kreisringförmig (Fig. 7) oder U-förmig (Fig. 8), erzielt werden kann.

Figur 9 deutet an, daß auch ein rohrförmiger Grundkörper für den erfindungsgemäßen Flotationskasten benutzt werden kann. Dabei beträgt die Füllhöhe etwa 1 bis 1,5 m je nach Rohrdurchmesser.

Heidenheim, den 03.06.80
Cg/Srö

S 3764 International
Kennwort: "Flach-Flotationszelle"

J.M. Voith GmbH
Heidenheim

Patentansprüche

1. Flotationsbehälter ohne Rührwerk mit einer Schaumabzugsvorrichtung und mit einem im wesentlichen horizontalen Durchfluß, bei dem die gesamte Suspension am Eintrittsende über die Behälterbreite verteilt an einer oder durch eine diese bestimmende Querwand in den Behälter eingeleitet und am Austrittsende abgeführt wird, dadurch gekennzeichnet, daß mindestens in der Nähe der die Breite des Flotationsbehälters bestimmenden Querwand überwiegend auch die Luft über die Behälterbreite verteilt zugeführt wird und ausschließlich am Austrittsende des Flotationsbehälters der Schaum über eine Schaumabzugsrinne (4) abgeführt wird, daß die durch den gegenseitigen Abstand dieser die Behälterbreite bestimmenden Querwände gegebene Länge des Flotationsbehäl-ters (1, 1' usw.) so groß ist, daß der zwischen diesen Querwänden liegende Gesamtströmungsweg der Suspension wesentlich größer ist ald die durchschnittliche Höhe des Flüssigkeits-spiegels im Flotationsbehälter (1, 1' usw.), daß der Schaum-abzug durch eine mittels einer Einschnürung der Suspensionsströmung kurz vor der Schaumabzugsrinne (4) des Flotationsbehälters bewirkte Beschleunigung der Suspensionsströmung unterstützt wird und daß sich die Schaumabzugsrinne (4) quer zur Strömungsrichtung der Suspension über mindestens die an der Einschnürstelle (5) der Suspensionsströmung vorhandene Breite des Flotationsbehälters erstreckt.

2

2. Flotationsbehälter nach Anspruch 1, dadurch gekennzeichnet, daß die Einschnürstelle (5) durch eine wallartige Erhebung am Boden des Flotationsbehälters gebildet ist.

3. Flotationsbehälter nach Anspruch 1 oder 2, dadurch gekennzeichnet, daß die durchschnittliche Höhe der Suspension im Flotationsbehälter (1, 1' usw.) zwischen 0,8 und 1,2 m liegt.

4. Flotationsbehälter nach Anspruch 1 oder 2, dadurch gekennzeichnet, daß die Zuführung der Suspension und/oder der Luft zumindest für den ersten einer Serienschaltung von Flotationsbehältern (1, 1' usw.) mittels einem Injektor (13) erfolgt.

5. Flotationsbehälter nach Anspruch 4, dadurch gekennzeichnet, daß die durchschnittliche Höhe der Suspension im Flotationsbehälter (1, 1' usw.) zwischen 0,8 und 1,2 m liegt.

6. Flotationsbehälter nach Anspruch 4, dadurch gekennzeichnet, daß die Suspension bei übereinandergestapelten Flotationsbehältern jeweils durch Fallrohre (10, 11) vom einen zum nachfolgenden Flotationsbehälter (1, 1' usw.) durch die Schwerkraft übertritt.

7. Flotationsbehälter nach Anspruch 6, dadurch gekennzeichnet, daß in die Fallrohre (10, 11) ein Dispergierapparat eingeschaltet ist.

8. Flotationsbehälter nach Anspruch 4, dadurch gekennzeichnet, daß ein Injektor für Luft und Suspension als ein halbes Kreisrohr (8) ausgebildet ist, dessen an sich offene Längsseite begrenzt ist durch eine Wand eines Injektorkastens (21), in dem das Halbrohr (8) gelagert ist, daß der Injektorkasten (21) so an einer Außenwand an der Zuströmseite des Flotationsbehälters angebracht ist, daß der Scheitel des Halbrohres mit einer dort vorgesehenen Austrittsöffnung (9) für die mit Luft versetzte Suspension in den Flotationsbehälter hineinragt, daß im außerhalb des Flotationsbehälters befindlichen Teil des Halbrohres innerhalb des Injektorkastens und in mindestens einer der Injektorkastenwandungen Zufuhrbohrungen (24) für die Luft vorgesehen sind und daß die Eintrittsöffnungen des Injektors für die Suspension mindestens eine der axialen Endöffnungen des Halbrohres (8) ist.

9. Flotationsbehälter nach Anspruch 8, dadurch gekennzeichnet, daß die Suspension bei übereinandergestapelten Flotationsbehältern jeweils durch Fallrohre (10, 11) vom einen zum nachfolgenden Flotationsbehälter (1, 1' usw.) durch die Schwerkraft übertritt.

10. Flotationsbehälter nach Anspruch 9, dadurch gekennzeichnet, daß in die Fallrohre (10, 11) ein Dispergierapparat eingeschaltet ist.

11. Flotationsbehälter nach Anspruch 8, dadurch gekennzeichnet, daß die durchschnittliche Höhe der Suspension im Flotationsbehälter (1, 1' usw.) zwischen 0,8 und 1,2 m liegt.

12. Flotationsbehälter nach Anspruch 11, dadurch gekennzeichnet, daß die Suspension bei übereinandergestapelten Flotationsbehältern jeweils durch Fallrohre (10, 11) vom einen zum nachfolgenden Flotationsbehälter (1, 1' usw.) durch die Schwerkraft übertritt.

13. Flotationsbehälter nach Anspruch 12, dadurch gekennzeichnet, daß in die Fallrohre (10, 11) ein Dispergierapparat eingeschaltet ist.

Heidenheim, den 25.05.81
Cg/Srö

Fig. 1

Fig. 2

Fig. 3

Fig. 4

Fig. 5

Fig. 6

Luft

Luft

Luft

Fig. 7

Fig 8

35  34  36

37  38  33          33

Luft

Luft

*Fig . 10*

2

*Fig. 9*

## EUROPÄISCHER RECHERCHENBERICHT

**Europäisches Patentamt**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 161 015 (ESCHER WYSS) <br><br> * Seite 3, letzter Absatz - Seite 7, Zeile 8; Ansprüche 1-6; Figur * <br><br> -- <br><br> DE - A - 2 812 105 (KLOCKNER-HUMBOLDT-DEUTZ) <br><br> * Seite 13, Zeile 9 - Seite 15, Zeile 18; Figuren 3-5 * <br><br> -- <br><br> US - A - 4 160 737 (PIELKENROOD) <br><br> * Spalte 1, Zeile 51 - Spalte 3, Zeile 28; Figuren 1,2 * <br><br> & DE - A - 2 460 623 <br><br> -- <br><br> US - A - 1 380 650 (HEBBARD) <br><br> * Seite 2, Zeilen 18-43; Figuren 1,2,4 * <br><br> -- <br><br> US - A - 1 442 306 (STONEBRAKER) <br><br> * Seite 1, Zeile 62 - Seite 2, Zeile 25; Figur 1 * <br><br> -- | 1,6,9, 12 <br><br><br><br><br> 4,8 <br><br><br><br><br> 1,4 <br><br><br><br><br><br> 6,9,12 <br><br><br><br> 6,9,12 | B 03 D 1/14 <br>         1/24 <br> C 02 F 1/24 <br> D 21 F 1/70 |
| A <br><br> A <br><br> A <br><br> A | FR - A - 2 420 597 (LENOX INSTITUTE FOR RESEARCH) <br><br> US - A - 2 742 424 (SADDINGTON et al.) <br><br> US - A - 3 249 533 (FOWLER) <br><br> DE - A - 2 525 550 (GUNTHER) <br><br> ----- | | |

**RECHERCHIERTE SACHGEBIETE (Int. Cl.³)**

B 03 D
C 02 F
D 21 B
D 21 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-09-1981 | LAVAL |

EPA form 1503.1  06.78